(19)

Europäisches
Patentamt
European
Patent Office
Office européen
des brevets

(11) **EP 2 584 460 A1**

(12) **EUROPEAN PATENT APPLICATION**

(43) Date of publication:
**24.04.2013 Bulletin 2013/17**

(51) Int Cl.:
*G06F 9/30* (2006.01)        *G06F 15/80* (2006.01)

(21) Application number: **11185934.4**

(22) Date of filing: **20.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventors:
• **Van Kampen, David**
  **5629 GM Eindhoven (NL)**
• **Smeets, Jean-Paul**
  **5612 MH Eindhoven (NL)**

(74) Representative: **Valea AB**
**Anna Lindhs Plats 4**
**211 19 Malmö (SE)**

(54) **Vector processing system comprising a replicating subsystem and method**

(57)    Embodiments relate to a vector processing system (100) for replicating a single element of a source vector into a plurality of elements of a result vector. The processing system comprises a replicating subsystem (102) configured to receive a replicate instruction comprising a source vector register identifier configured to identify a source vector register (108'). The replicating subsystem (102) is configured to retrieve a dynamically generated index value from an index register (104). The replicating subsystem (102) is further configured to retrieve a source vector by means of the source vector register identifier. By means of the retrieved dynamically generated index value, the replicating subsystem (102) replicates a single element of the source vector to a plurality of elements of a result vector.

FIG. 2

**Description**

**TECHINCAL FIELD**

Embodiments herein relate to an improved processing system and method. In particular, embodiments relate to replication of a single element into a result vector.

**BACKGROUND**

Algorithms for processing digital signals typically require a large number of mathematical operations to be performed quickly and repetitively on a set of data. A vector digital signal processor is a specialized microprocessor with an optimized architecture for the fast operational need of digital signal processing by means of which instructions operating on one-dimensional arrays of data called vectors can be executed.

Vector digital signal processors can exploit data level parallelism available in many digital signal processing algorithms, by applying the Single Instruction Multiple Data (SIMD) scheme. This means that one and the same arithmetical or other type of operation is, by means of a plurality of separate processing elements, done in parallel on a vector comprising a plurality of data elements. In other words, one operation may be done in parallel on P data elements by means of P separate processing elements. This means that higher performance and more efficient energy consumption can be achieved as compared to the performance and power consumption achieved by scalar digital signal processors, by means of which scalar digital signal processors one processing element operates on one data element at a time. Further, also the performance per area unit of the processor can be improved when increasing the number of separate processing elements.

A measure of a processor's performance is the number of operations executed per second, often referred to as Millions of Operations Per Second (MOPS). Thus by means of vector digital signal processors a higher number of MOPS can be achieved as compared to the number of MOPS achieved by scalar digital signal processors.

Many digital signal processing algorithms, like filtering for finite impulse response filters, correlation, etc., are vectorizable over the input data stream. Their implementations process input vectors with P sequential elements which can be handled by conventional vector processors.

Further, vectorizing algorithms like the fast Fourier transformation, Viterbi decoding, etc. require support for permuting data elements within a vector, according to an algorithm specific pattern. Conventional vector processors often provide support for this kind of permutation, reordering or shuffling.

However, the implementation of a third kind of digital signal processing algorithms comprising matrix multiplication, Cholesky decomposition, QR decomposition, etc. requires support for replicating a single data element into a destination vector.

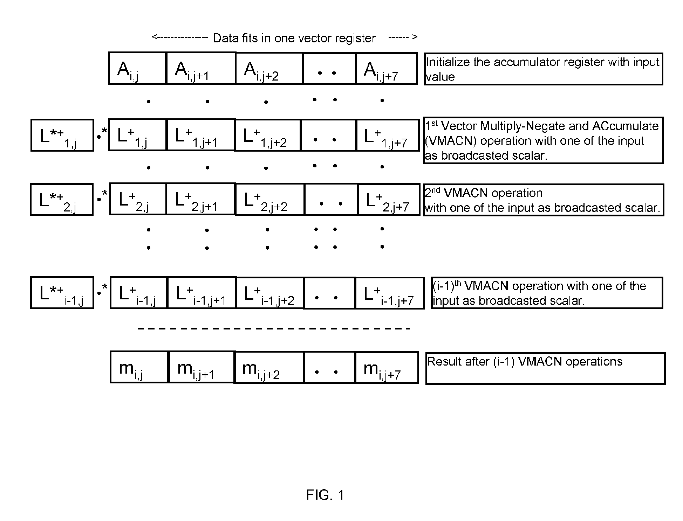

With reference to **Figure 1** an example implementation of Cholesky decomposition on a vector processor is now given to illustrate the need for replicating a single element into a destination vector.

The Cholesky algorithm does the decomposition of a positive definite hermitian matrix A into

$$A = L * L^{+} \qquad \text{(eq. 1)}$$

where, $L$ is a lower triangular matrix with strictly positive diagonal elements and $L+$ is the conjugate transpose of the lower triangular matrix $L$. The $L+$ matrix output (transpose of the lower triangular matrix $L$) of the Cholesky decomposition can be computed as

$$L^{+}_{i,j} = \frac{1}{L^{+}_{i,i}} \left( A_{i,j} - \sum_{k=1}^{i-1} L^{+*}_{k,i} * L^{+}_{k,j} \right) \quad \text{(eq. 2)},$$

for j>i (upper triangular elements)

$$L_{i,i}^+ = \sqrt{\left( A_{i,i} - \sum_{k=1}^{i-1} L_{k,i}^{+\,*} * L_{k,i}^+ \right)} \quad \text{(eq. 3),}$$

for diagonal elements

An example vectorization scheme of this algorithm is shown in Figure 1. The program calculates a vector of outputs belonging to a set of columns within a row of Matrix $L^+$, by looping over an index $k$. $k$ is the number of the input row and is an integer between 1 and $i$-1, where i is the number of the output row for which the calculation is being performed. Thus $k$ and $i$ are row indices of the result matrix $L+$. Further, $j$ is the column index of the result matrix $L+$.. From Figure 1 and equation 2 it is apparent that scalar *element* $L_{k,i}^{+*}$ is multiplied with a vector of $[L_{k,j}^+, L_{k,j+1}^+, \ldots , L_{k,j+P-1}^+]$. On a vector processor, the scalar element $L_{k,i}^{+*}$ has to be dynamically selected from a source vector and has to be replicated in all elements of a temporary vector to do a vector multiplication operation with the vector of $[L_{k,j}^+, L_{k,j+1}^+, \ldots , L_{k,j+p-1}^+]$.

In the prior art, the instruction set of vector processors typically has a set of operations by which the replication of data elements into a vector can be implemented.

For example, an Embedded Vector Processor (EVP) (cf. "Vector processing as an enabler for software-defined radio in handheld devices", Van Berkel et al, 2005, http://dl.acm.org/citation.cfm?id=1287309) has a Vector SHuffle Unit (VSHU) that by means of a shuffle pattern supports the copying of a specified element of an input vector into a specific element of an output vector. This operation can be used to reorder elements, but also to selectively copy or replicate elements. This shuffle pattern can be prepared at compile time or generated at run-time.

According to another prior art method that is typically used for cases with dynamic indexing of elements to be replicated, one element is firstly copied to the scalar path based on an element index variable. The element index value is stored in a scalar register. Secondly, the obtained scalar value is broadcasted into all elements of a target vector. An excerpt of EVP assembly instructions 1-3 that use this method is

    [1] vread_elem16 r0, vr3, r7
    [2] nop
    [3] vbcst r0
    ‖ vmac16 vr4, vr3, vrbcst

Instruction 1 has the vread_elem operation, which does the fetching of a single scalar value from vector vr3, based on the element index value stored in scalar register r7, and stores the result in scalar register r0.

Instruction 2 has a nop instruction , i.e. a "no operation performed" instruction.

Instruction 3 has the vbcst operation, which does the broadcasting of the value stored in register r0 into all elements of the third input argument of the vmac operation.

Another prior art method based on an Altivec instruction set has support for permuting elements in a vector: the "vperm" instruction, cf. "AltiVec™ Technology Programming Environments Manual", ALTIVECPEM Rev. 3, 04/2006, http://www.freescale.com/files/32bit/doc/ref_manual/ALTIVECPEM.pdf. It uses the content of a normal vector register as a shuffle pattern. Additionally, it has the "splat" instruction, through which an element of a vector can be replicated into a destination vector. Note that the index of the element to be replicated is given as an immediate constant, as part of the instruction word.

A drawback with the prior art based on shuffle patterns is that these shuffle patterns typically are calculated at compile time. In the embedded vector processors and the Altivec based processors that comprise a shuffle unit controlled by a shuffle pattern vector or an index vector, typically calculate these patterns or indices at compile time. Storing the vectors for all replication alternatives is costly in terms of memory and/or register resources.

Further, generating a shuffle pattern vector or an index vector at run-time may not be supported, because the processor architecture may require them to be fixed at compile time. Generating a shuffle pattern vector on the fly, could also be limiting for the processor performance, because it may require plurality of instructions to be executed and the instructions may each require at least one clock cycle for its execution.

A drawback with the prior art based on selected and broadcasted elements is thus the processing delay they cause which limits the performance of the processor.

Processors like embedded vector processors with support for extracting a selected element from a vector (hardwired or through memory), followed by a broadcast of this value into all elements of a vector, typically suffer from the delay of the required sequential operations, which limits the performance.

In the excerpt of embedded vector processor assembly instructions 1-3 described above, the read_elem and broadcast operations are each single cycle operations, i.e. operations executed during one clock cycle. However for the embedded vector processor, there is an issue that the broadcast operation cannot take the scalar input value from the bypass network in the processor pipeline stage when the register file is read. As the value has to be stored in a register first, this gives one additional cycle delay between the read_elem operation and the broadcast in instruction 2 of the example, hence the insertion of a nop operation.

Another issue with the read_elem operation is that its hardware implementation in the embedded vector processor gives a critical path in the chip layout, because of the relatively long distance between scalar and vector computational units. If the code would utilize this operation a lot, then increasing the delay of the operation (to reduce layout problems) could have serious performance impact. If there are alternatives to implement the replication, with shorter operation latency then the impact of such a change is less.

Further, note that this read_elem and broadcast method typically involves multiple resources, which may limit the performance due to their unavailability.

A drawback with the prior art based on replicate operations with an immediate index argument is that the index has to be fixed at compile time. Thus, processors with a replicate operation, using an immediate constant value obtained from the instruction word, have the limitation that the element index must be fixed at compile time. It cannot, for example, be based on a loop iterator value or a dynamically computed index. This increases the program code size and possibly adds control complexity to switch between alternative replication operations.

## SUMMARY

Most of the prior art requires shuffle patterns or index values to be generated at compile time which increases the program code size. Further, it is costly in terms of memory and/or register resources to store the alternative shuffle patterns and index values. Other prior art requires a plurality of instructions to be accomplished to achieve a replicate instruction causing processing delays of several clock cycles.

It is therefore an object of embodiments herein to provide a way of improving performance of a data processing system.

According to a first aspect of embodiments herein, the object is achieved by a method in a vector processing system for replicating a single element of a source vector into a plurality of elements of a result vector. At least one replicate instruction is received. The at least one replicate instruction comprises a source vector register identifier configured to identify a source vector register. A dynamically generated index value is retrieved from an index register. A source vector is retrieved from the source vector register by means of the source vector register identifier. Further, a single element of the source vector is replicated into a plurality of vector elements of a result vector by means of the retrieved index value.

According to a second aspect of embodiments herein, the object is achieved by a vector processing system for replicating a single element of a source vector into a plurality of elements of a result vector. The vector processing system comprises a replicating unit configured to receive at least one replicate instruction. The at least one replicate instruction comprises a source vector register identifier configured to identify a source vector register. A dynamically generated index value is retrieved from an index register. A source vector is retrieved from the source vector register by means of the source vector register identifier. By means of the retrieved index value, a single element of the source vector is replicated into a plurality of vector elements of a result vector.

Since the index value is a dynamically generated index value, i.e. an index value generated at run time, no shuffle patterns or index values have to be generated at compile time. This results in an improved performance of the data processing system.

An advantage with embodiments herein is the improved performance relative to prior art is that embodiments herein do not require the compile time calculation of shuffle patterns or index values, with associated storage in memory and/or registers. Further, there is no need to (conditionally) select or load shuffle patterns at run-time.

A further advantage with embodiments herein is the improved performance relative to prior art methods that replicate by combining multiple operations. This is because prior art methods replicating by combining multiple operations always will have a delay larger than one clock cycle, since each of the multiple operations will require at least one clock cycle for execution.

A further advantage with embodiments herein is that they support the broadcast of a run time indexed vector element.

A further advantage with embodiments herein is that they are advantageous to processor architectures which have both scalar and vector register files. In such processor architectures, the index is normally produced by a scalar functional unit which writes the index into a scalar register file.

A further advantage with embodiments herein is that they are advantageous in architectures which don't have separate scalar and vector register files but use a combined register file for both scalars and vectors. Embodiments herein may be used in processor architectures which do have separate scalar and vector register files, but where the scalar subsystem and vector subsystem are decoupled. In this situation it can be advantageous to calculate the index in the vector subsystem.

A subsystem when used herein is to be understood as a collection of functional units, such as arithmetic logic units or multipliers, that perform data processing operations.

A further advantage with embodiments herein is that they are advantageous in processor architectures that use a dedicated register to provide the operand, i.e. an input to an instruction to be executed.

A further advantage with embodiments herein is that the replication of the index is done on a shared resource used for the broadcast operation. This means that no support for replication of the index inside a shuffle unit is required. Further, this means that a dedicated port on the scalar register file is not used. Furthermore, this means that no storing of a shuffle pattern is required.

## BRIEF DESCRIPTION OF THE DRAWINGS

Examples of embodiments herein are described in more detail with reference to attached drawings in which:

Figure 1 is a schematic block diagram of a vectorization scheme of the Cholesky decomposition according to prior art;

Figure 2 is a schematic block diagram illustrating embodiments of a vector processing system;

Figure 3 is a flow chart depicting embodiments of a method in vector processing system;

Figure 4 is a schematic functional block diagram illustrating a first group of embodiments of a vector processing system;

Figure 5 is a schematic functional block diagram illustrating a second group of embodiments of a vector processing system;

Figure 6 is a schematic functional block diagram illustrating a third group of embodiments of a vector processing system;

Figure 7 is a schematic functional block diagram illustrating a fourth group of embodiments of a vector processing system; and

Figure 8 is a schematic functional block diagram illustrating a fifth group of embodiments of a vector processing system.

## DETAILED DESCRIPTION

Embodiments will be exemplified in the following non-limiting description.

Embodiments herein relate to the implementation of the third kind of digital signal processing algorithms comprising an operation having as a first argument a single scalar element and as a second argument a vector and in which operation the same first argument is to be used for each of the vector elements comprised in the vector. Thus, such an operation would benefit from a replication of the single scalar element into a plurality of elements of a vector before execution of the operation. Such algorithms include e.g. matrix multiplication, Cholesky decomposition, QR decomposition. As previously described, this kind of digital signal processing algorithms require support for replicating a single data element into a destination vector.

Embodiments herein provide for an efficient method of replicating a run time selectable single element, e.g. a single scalar element, of a source vector to a plurality of elements of a result vector. This method will sometimes be referred to as a replicate operation. A dynamically generated index value of the single element to be replicated is stored in a scalar register or alternatively at some position in a vector register or in a vector input argument. A source vector comprising the single element to be replicated is stored in a source vector register and a result vector of the replicate operation may be stored in a destination vector register. The destination vector register may be the same register as the source vector register, but it may also be a different register.

In some embodiments, the dynamically generated index value and the source vector comprising the single element to be replicated will be provided as inputs to a replicating unit. The replicating unit will then replicate the single element denoted by the index value and generate a result vector comprising the replicated element in a plurality of result vector elements. The result vector may then be stored in the destination register.

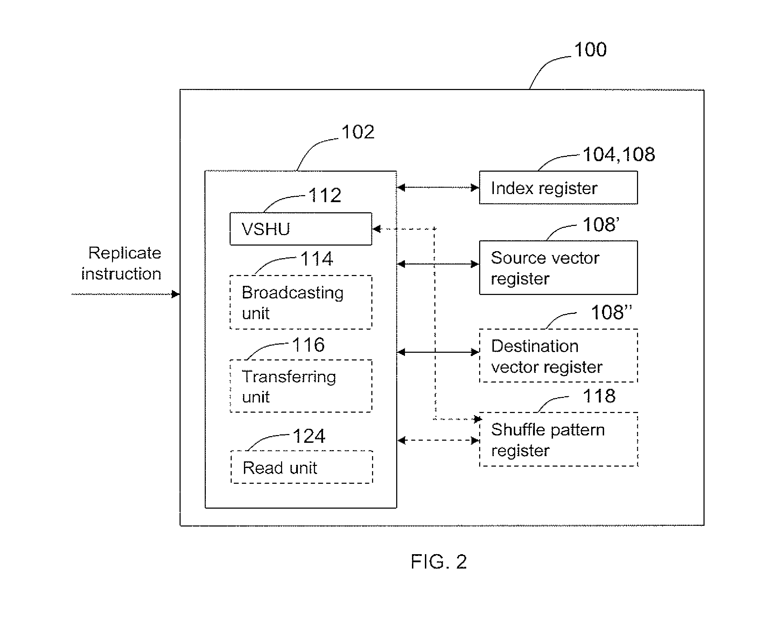

**Figure 2** depicts a **vector processing system 100** for replicating a single element, e.g. a single scalar element, of a source vector into a plurality of elements of a result vector. In the figure, optional components or units, or components or units only comprised in some embodiments, are illustrated with dashed lines. In some embodiments, the vector processing system is realized as a single vector processing unit.

The term "vector processing system" when used herein comprises any digital logic device or system capable of performing one operation on a vector of input data. For example performing the same operation on multiple, identical, parallel processing elements, i.e. Single-instruction-Multiple-Data (SIMD) processors.

The vector processing system 100 comprises **a replicating subsystem 102** configured to receive at least one replicate instruction. The replicate instruction comprises a source vector register identifier. The replicate instruction may also comprise an index register identifier and a destination vector register identifier.

The index register identifier is configured to identify an **index register 104** comprised in the vector processing unit 100. The index register 104 is configured to store a dynamically generated index value.

In some embodiments, the replicating subsystem 102 is configured to have knowledge of the index register 104 that stores the dynamically generated index value. In such embodiments, the replicate instruction does not need to comprise an index register identifier.

A dynamically generated index value is an index value generated during the processing of the vector processing system 100, i.e., an index value generated during run-time. Thus, the dynamically generated index value may change over time and in dependence of the processing of operations by the vector processing system 100. The dynamically generated index value may be an absolute value, e.g. a positive integer, indicating a location in a source vector register. In some embodiments, the dynamically generated index value is a relative value. A relative value may be a value given in relation to another value or a positive integer which other value or positive integer relates to a location in the source vector register. In some embodiments, a relative value is a value given in relation to a pointer to a location in the source vector register.

The dynamically generated index value is configured as an indication of which one of a plurality of vector elements comprised in a source vector comprises the single element to be replicated. Since, the single element is determined by means of the dynamically generated index value generated during run-time, the single element could be referred to as a run-time selectable single element.

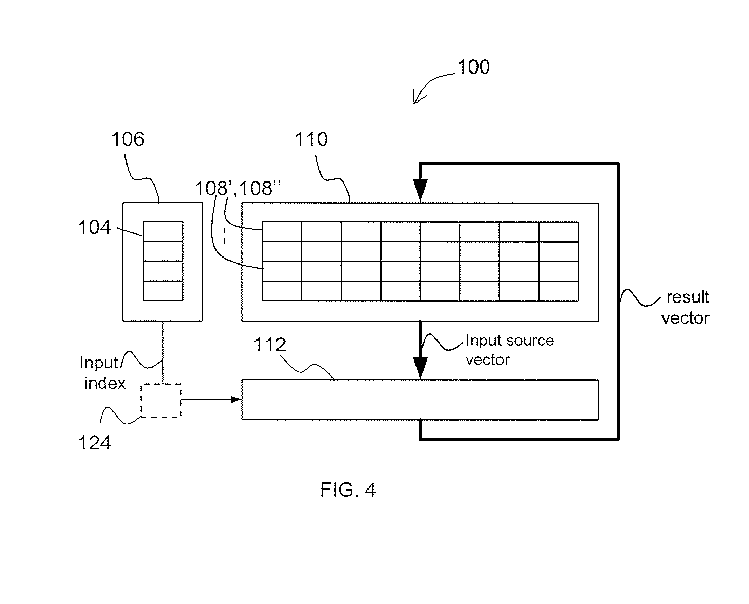

In some embodiments, the index register 104 is a scalar index register 104. as schematically illustrated in figures 4, 6, 7 and 8. The scalar index register 104 may be comprised in a **scalar register file 106.** In some embodiments, the index register identifier may be referred to as a index scalar register identifier.

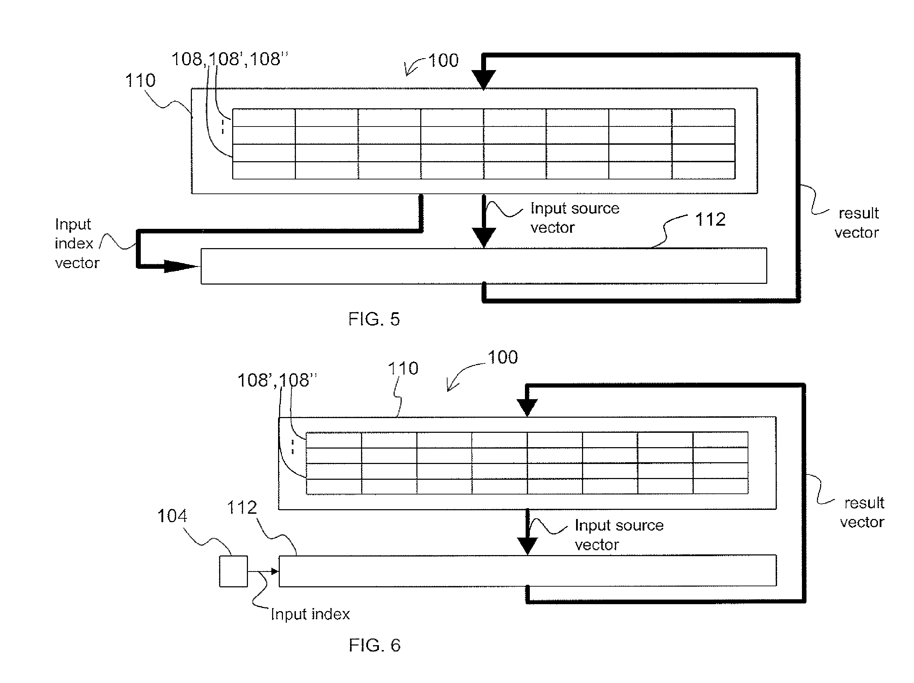

However, in some embodiments, the index register 104 may be a **vector index register 108** comprised in a **vector register file 110,** as schematically illustrated in figure 5. The retrieved index value may be comprised in a specific vector element of the vector index register 108. For example, the retrieved index value may be comprised in a predetermined vector element of the vector index register 108. In some embodiments, the index register identifier may be referred to as a index vector register identifier.

In some embodiments, the index value is retrieved in a cyclic manner from the elements of the vector index register 108. That means that a first index value from the first element of the vector index register 108 is retrieved in a first cycle, that a second index value from the second element of the vector index register 108 is retrieved in a second cycle, etc. However, it should be understood that the first index value may be retrieved from the (n+1):th vector element, and the second index value may be retrieved from the (n+2):th vector element, etc, wherein n is an integer equal to or larger than 1.

The source vector register identifier is configured to identify a **source vector register 108'** comprised in the vector processing system 100. The source vector register 108' comprises a source vector, which source vector comprises a single element to be replicated.

The destination vector register identifier is configured to identify **a destination vector register 108"** comprised in the vector processing system 100. The destination vector register 108" is configured to store a result vector of the replicate operation.

The at least one replicate instruction is configured to instruct the replicating subsystem 102 to perform a replicate operation based on the source vector register identifier. In some embodiments, the at least one replicate instruction is configured to instruct the replicating subsystem 102 to perform a replicate operation based on the source vector register identifier and the index register identifier.

The replicating subsystem 102 is connected to or arranged in communication with the index register 104. The replicating subsystem 102 is configured to retrieve a dynamically generated index value from the index register. In some embodiments, the at least one replicate instruction is configured to instruct the replicating subsystem 102 to retrieve a dynamically generated index value from the index register 104, by means of the index register identifier.

The replicating subsystem 102 is connected to or arranged in communication with the source vector register 108'. By means of the source vector register identifier, the replicating subsystem 102 is configured to retrieve a source vector from the source vector register 108'. The replicating subsystem 102 is further configured to replicate a single element of the source vector into a plurality of vector elements comprised in a result vector. By means of the retrieved dynamically generated index value, the replicating subsystem 102 is configured to determine the single element to replicate.

In some embodiments, the replicating subsystem 102 is configured to replicate the single element of the source vector into a plurality of elements of the result vector using e.g. a mask such as a bit mask. The mask is configured to enable or disable vector elements for being written to. Thus, the single element of the source vector is replicated only to the those elements of the result vector that are enabled by the mask.

In some embodiments, the replicating subsystem 102 is configured to replicate the single element of the source vector into a plurality of elements of the result vector.

The replicating subsystem 102 may further be connected to or arranged in communication with the destination vector register 108" and configured to store the result vector in the destination vector register 108" identified by the destination vector register identifier.

The replicating subsystem 102 may be or comprise a **vector shuffle unit (VSHU) 112**. This will be described in more detail below with reference to the first, second, and third groups of embodiments and to the Figures 4, 5 and 6.

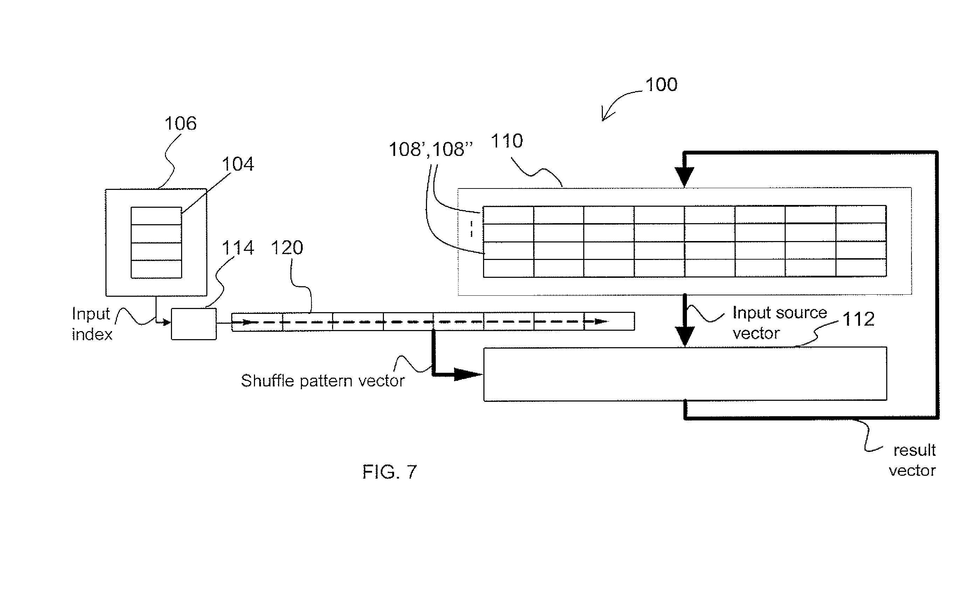

However, in some embodiments, the replicating subsystem 102 may comprise the vector shuffle unit 112 and a **broadcasting unit 114**. This will be described in more detail below with reference to the fourth group of embodiments and to Figure 7.

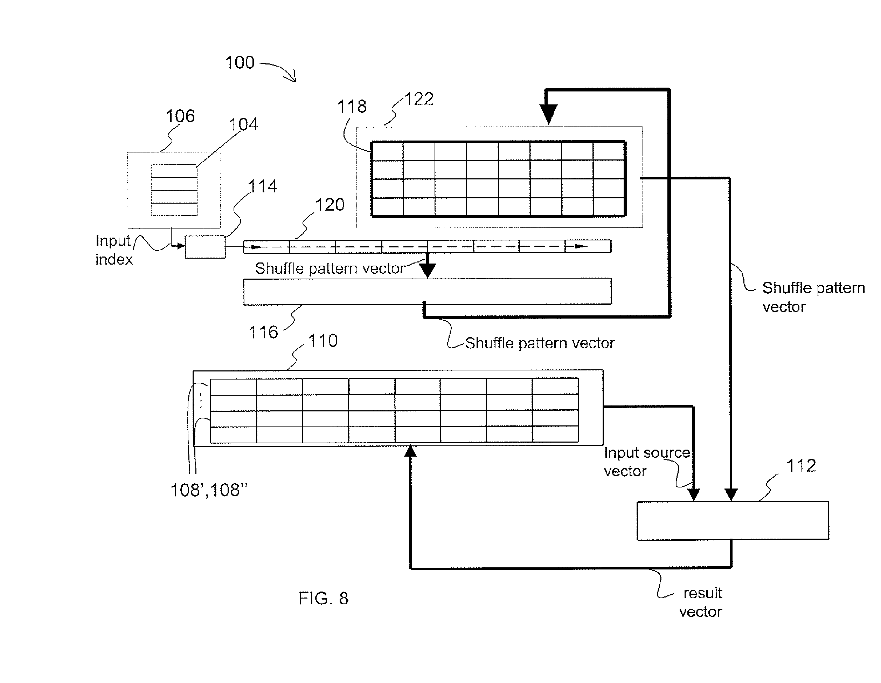

In some embodiments, the replicating subsystem 102 may comprise the vector shuffle unit 112, the broadcasting unit 114, and a **transferring unit 116** configured to move a shuffle pattern vector argument to a **shuffle pattern register 118**. This will be described in more detail below with reference to the fifth group of embodiments and Figure 8.

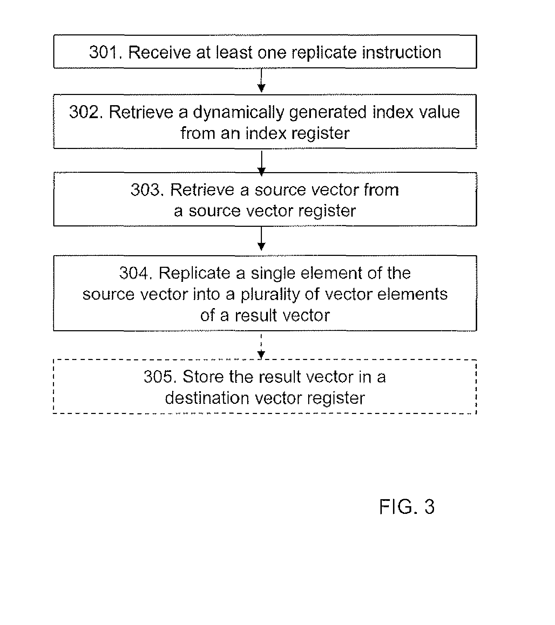

Embodiments of a **method in the vector processing system 100** for replicating a single element into a result vector will now be described with reference to the flowchart depicted in **Figure 3.** The method comprises the following actions. However, it should be understood that the actions may be carried out in another suitable order than described below.

**Action 301**

At least one replicate instruction is received in the vector processing system 100. The at least one replicate instruction comprises the source vector register identifier. In some embodiments, the replicate instruction comprises the index register identifier. The replicate instruction may also comprise a destination vector register identifier, as previously described.

The at least one replicate instruction is configured to instruct the replicating subsystem 102 to perform a replicate operation based on at least the source vector register identifier and possible also on the index register identifier.

**Action 302**

A dynamically generated index value is retrieved from the index register 104. The dynamically generated index value is retrieved from the index register 104 by means of the replicating subsystem 102. In some embodiments, the dynamically generated index value is retrieved by means of the replicating subsystem 102 and the index register identifier. This means that the replicating subsystem 102 uses the index register identifier to identify the index register 104, whereby the replicating subsystem 102 can retrieve the dynamically generated index value from the index register 104.

**Action 303**

A source vector is retrieved from the source vector register 108'. The source vector is retrieved by the replicating subsystem 102 and the source vector register identifier. This means that the replicating subsystem 102 uses the source vector register identifier to identify the source vector register 108', whereby the replicating subsystem 102 can retrieve the source vector from the vector register 108'. The source vector comprises the single element to be replicated.

**Action 304**

The single element of the source vector is replicated into a plurality of vector elements of a result vector. The single element may be replicated by means of the replicating subsystem 102 and the retrieved dynamically generated index value. As previously described, the retrieved dynamically generated index value is an indication of which one of a plurality of vector elements comprised in the source vector that comprises the single element to be replicated. Therefore, by means of the retrieved dynamically generated index value, the replicating subsystem 102 may replicate the single element.

In some embodiments, the replicating subsystem 102 is configured to replicate the single element of the source vector into a plurality of elements of the result vector using e.g. a mask such as a bit mask. The mask is configured to enable or disable vector elements to be written to. Thus, the single element of the source vector is replicated only to the those elements of the result vector that are enabled by the mask.

In some embodiments, the replicating subsystem 102 is configured to replicate the single element of the source vector into a plurality of elements of the result vector.

In some embodiments, the replicating subsystem 102 comprises only a vector shuffle unit 112. In such embodiments, the action of replicating a single element of the source vector into a plurality of vector elements comprised in a result vector further comprises retrieving the single element from the source vector. The single element may be retrieved by means of the vector shuffle unit 104 and the retrieved dynamically generated index value.

In some embodiments, the replicating subsystem 102 comprises a vector shuffle unit 112 and a broadcasting unit 114. In such embodiments, the action of replicating a single element of a source vector into a plurality of vector elements comprised in a result vector, comprises broadcasting the retrieved dynamically generated index value into a plurality of elements of a **shuffle pattern vector 120.** The broadcasting may be performed by means of the broadcasting unit 114.

In the action of replicating a single element of a source vector into a plurality of vector elements comprised in a result vector, the replication may be performed by means of the vector shuffle unit 112 and the shuffle pattern vector 120 comprising the broadcasted dynamically generated index value. The shuffle pattern vector 120 may be used as an input argument to the vector shuffle unit 112.

In some embodiments, the replicating subsystem 102 comprises a vector shuffle unit 112, a broadcasting unit 114 and a transferring unit 116. In such embodiments, the shuffle pattern vector 120 is moved to a shuffle pattern register 118 comprised in a **shuffle pattern register file 122**. The transferring unit 116 may be configured to move the shuffle pattern vector 120 to the shuffle pattern register 118.

The shuffle pattern vector 120 may be retrieved from the shuffle pattern register 118 by means of the vector shuffle unit 112 and may be used as an input argument to the vector shuffle unit 112.

In some embodiments, the shuffle pattern register file 122 is comprised in the vector shuffle unit 112 or in the vector register file 110.

**Action 305**

Optionally, the result vector may be stored in the destination vector register 108" identified by the destination vector register identifier. The result vector may be stored by means of the replicating subsystem 102.

**Figure 4** depicts **a first group of embodiments** of the vector processing system 100 for replicating a single element of a source vector into a plurality of elements of a result vector.

As schematically illustrated, the vector processing system 100 comprises a vector shuffle unit 112, and a scalar index register file 106 comprising a scalar index register 104. The vector shuffle unit 112 is connected to or arranged in communication with the index register file 106.

The scalar index register file 100 comprises $S_s$ scalar entries, each scalar entry having a size of W bits.

$S_s$ is a positive integer larger than 1. In some embodiments, the total number $S_s$ of scalar entries in the scalar index register file is 4, as schematically illustrated in e.g. figure 4, but the number of scalar entries can be another suitable number.

Further, W is the scalar word size, i.e., the number of bits stored per scalar index register. W is a positive integer larger than 1. In some embodiments, W is a multiple of 8.

The vector processing system 100 comprises further a vector register file 110 configured to comprise the source vector register 108' and the possible destination vector register 108". The vector shuffle unit 112 is connected to or arranged in communication with the vector register file 110.

The vector register file 110 comprises $S_v$ vector entries, each vector entry comprises P vector elements and each vector element P has a size of W bits.

$S_v$ is a positive integer larger than 1. In some embodiments, the total number $S_v$ of vector entries is 4, as schematically illustrated in e.g. figure 4, but the number of vector entries can be another suitable number.

Further, P is a positive integer larger than 1. In some embodiments, the total number P of vector elements is 8, as schematically illustrated in e.g. figure 4, but it can be another suitable number.

Furthermore, W is a positive integer larger than 1. In some embodiments, W is a multiple of 8, e.g. 16, but it can be another suitable number.

When the vector processing system 100 receives a replicate instruction, a dynamically generated index value is retrieved from the index register 104 by means of the index register identifier comprised in the replicate instruction. This is related to actions 301 and 302.

In some embodiments, the replicate instruction has the following syntax:

replicate(destination vector register identifier, source vector register identifier, index register identifier).

In such embodiments, when receiving the replicate instruction, the vector shuffle unit 112 is configured to retrieve the dynamically generated index value by means of the index register identifier.

In some other embodiments, the vector processing system 100 comprises an optional **read unit 124** arranged in communication with the index register file 106 and the vector shuffle unit 112. In such embodiments, the replicate instruction may comprise the following two parallel replicate operations having the following syntax:

replicate(index register identifier)
‖ repficate(destination vector register identifier, source vector register identifier). The read unit 124 is configured to retrieve the dynamically generated index value from the index register 104 by means of the index register identifier comprised in the first replication operation of the replicate instruction. Then the read unit 124 is configured to communicate the retrieved dynamically generated index value to the vector shuffle unit 112.

Further, as previously mentioned, in some embodiments, wherein the result vector is not stored in a destination vector register, the shuffle operation of the replicate instruction may not comprise the destination vector register identifier, but only the source vector register identifier.

Further, the vector shuffle unit 112 is configured to retrieve a source vector from a source vector register 108' by means of the source vector register identifier comprised in the replicate instruction. This is related to action 303.

By means of the retrieved dynamically generated index value, the vector shuffle unit 112 is then configured to replicate a single element of the source vector into a plurality of vector elements comprised in a result vector. The retrieved dynamically generated index value denotes the single element of the source vector. This is related to action 304.

Further, the vector shuffle unit 112 may be configured to store the result vector in the destination vector register 108" identified by the destination vector register identifier comprised in the replicate instruction. This is related to action 305.

Example 1

Assume that the scalar index register file 106 comprises four scalar index registers 104 numbered with the indices 0, 1, 2, and 3, and comprising the dynamically generated index values 1, 2, 3 and 4, respectively.

Assume also that the vector register 110 comprises a source vector 108'. The source vector 108' comprises eight vector elements 0, 1, 2, 3, 4, 5, 6, and 7 comprising the values A, B, C, D, E, F, G, and H, respectively.

If the index register identifier identifies the index register with index 2, the dynamically generated index value is 3, corresponding to the vector element 3 of the source vector having value D. Thus 3 is the single element having value D to be replicated into a plurality of vector elements of the result vector.

**Figure 5** depicts **a second group of embodiments** of the vector processing system 100 for replicating a single element of a source vector into a plurality of elements of a result vector.

As schematically illustrated, the vector processing system 100 comprise a vector shuffle unit 112, and a vector register file 110 configured to comprise the source vector register 108' and the possible destination vector register 108". The vector shuffle unit 112 is connected to or arranged in communication with the vector register file 110.

As previous mentioned, the vector register file 110 comprises $S_v$ vector entries, each vector entry comprises P vector elements and each vector element P has a size of W bits.

$S_v$ is a positive integer larger than 1. In some embodiments, the total number $S_v$ of vector entries is 4, but the number of vector entries can be another suitable number.

Further, P is a positive integer larger than 1. In some embodiments, the total number P of vector elements is 8, but it can be another suitable number.

Furthermore, W is a positive integer between larger than 1. In some embodiments, W is a multiple of 8, but it can be another suitable number.

In this second group of embodiments, the index register 104 is a vector index register 108 comprising a dynamically generated index value in a vector. Further, the vector register file 110 is configured to store the vector index register 108.

When the vector processing system 100 receives a replicate instruction, the vector shuffle unit 112 is configured to retrieve the dynamically generated index value from the vector index register 108 by means of the index register identifier comprised in the replicate instruction. This is related to actions 301 and 302.

In some embodiments, the replicate instruction has the following syntax:

replicate(destination vector register identifier, source vector register identifier, index register identifier).

However, as previously mentioned, in some embodiments, wherein the result vector is not stored in a destination vector register, the replicate instruction may not comprise the destination vector register identifier, but only the source vector register identifier and the index register identifier..

In some embodiments, the dynamically generated index value is stored in a specific vector element of the vector index register. For example, the dynamically generated index value may be stored in a predetermined vector element of the vector index register, such as in a first vector element. However, it should be understood that the index value may be store in another specific or predetermined vector element of the vector index register.

In some embodiments, a first dynamically generated index value to be used in a first replicate operation may stored in a first vector element, and a second dynamically generated index value to be used in a second replicate operation may stored in a second vector element, etc. However, as understood by those skilled in the art, the dynamically generated index values may be stored in another suitable order.

Further, the vector shuffle unit 112 is configured to retrieve a source vector from a source vector register 108' by means of the source vector register identifier comprised in the replicate instruction. This is related to action 303.

By means of the retrieved dynamically generated index value, the vector shuffle unit 112 is then configured to replicate a single element of the source vector into a plurality of vector elements comprised in a result vector. The retrieved dynamically generated index value denotes the single element of the source vector. This is related to action 304.

Further, the vector shuffle unit 112 may be configured to store the result vector in the destination vector register 108" identified by the destination vector register identifier comprised in the replicate instruction. This is related to action 305.

Example 2

Assume that the vector register file 110 comprises a vector index register 108 comprising eight vector elements, wherein the first vector element comprises the dynamically generated index value 3 .

Assume also that the vector register 110 comprises a source vector 108'. The source vector 108' comprises eight vector elements 0, 1, 2, 3, 4, 5, 6, and 7 comprising the values A, B, C, D, E, F, G, and H, respectively.

If the index register identifier identifies the index register 108 having the dynamically generated index values 3, the vector element 3 of the source vector is the single element to be replicated. Thus, 3 is the single element having value D to be replicated into a plurality of vector elements of the result vector.

**Figure 6** depicts **a third group of embodiments** of the vector processing system 100 for replicating a single element of a source vector into a plurality of elements of a result vector.

As schematically illustrated, the vector processing system 100 comprise a vector shuffle unit 112, and a scalar index register 104. The vector shuffle unit 112 is connected to or arranged in communication with the scalar index register 104.

The scalar index register 104 is a special purpose scalar index register, i.e., a scalar register comprising only one dynamically generated index value. In some embodiments, the term scalar index register 104 may be used to refer to a set of dedicated scalar index registers 104, e.g. two dedicated index registers 104 or another suitable number of dedicated scalar index registers 104.

The vector processing system 100 comprises further a vector register file 110 configured to comprise the source vector register 108' and the destination vector register 108". The vector shuffle unit 112 is connected to or arranged in communication with the vector register file 110.

As previously mentioned, the vector register file 110 comprises $S_v$ vector entries, each vector entry comprises P vector elements and each vector element P has a size of W bits.

$S_v$ is a positive integer larger than 1. In some embodiments, the total number $S_v$ of vector entries is 4, but the number of vector entries can be another suitable number.

Further, P is a positive integer larger than 1. In some embodiments, the total number P of vector elements is 8, but it can be another suitable number.

Furthermore, W is a positive integer between larger than 1. In some embodiments, W is a multiple of 8, but it can be another suitable number.

When the vector processing system 100 receives a replicate instruction, the vector shuffle unit 112 is configured to retrieve a dynamically generated index value from the index register 104. This relates to action 301 and 302.

In some embodiments, the replicate instruction has the following syntax:

replicate(destination vector register identifier, source vector register identifier) Thus, in the third group of embodiments, wherein there is only a single dedicated special purpose scalar index register, the replicate instruction may not need to comprise an index register identifier, since the index register is known to the vector processing system 100.

Further, as previously mentioned, in some embodiments, wherein the result vector is not stored in a destination vector register, the replicate instruction may not comprise the destination vector register identifier, but only the source vector register identifier.

Further, the vector shuffle unit 112 is configured to retrieve a source vector from a source vector register 108' by means of the source vector register identifier comprised in the replicate instruction. This relates to action 303.

By means of the retrieved dynamically generated index value, the vector shuffle unit 112 is then configured to replicate a single element of the source vector into a plurality of vector elements comprised in a result vector. The retrieved dynamically generated index value denotes the single element of the source vector. This relates to action 304.

Further, the vector shuffle unit 112 may be configured to store the result vector in the destination vector register 108" identified by the destination vector register identifier comprised in the replicate instruction. This relates to action 305.

Example 3

Assume that the special purpose scalar index register 104 comprises the dynamically generated index value 3.

Assume also that the vector register 110 comprises a source vector 108'. The source vector 108' comprises eight vector elements 0, 1, 2, 3, 4, 5, 6, and 7 comprising the values A, B, C, D, E, F, G, and H, respectively.

The vector element 3 having value D corresponds to the dynamically generated index value 3. Thus 3 is the single element having value D to be replicated into a plurality of vector elements of the result vector.

**Figure 7** depicts a **fourth group of embodiments** of the vector processing system 100 for replicating a single element of a source vector into a plurality of elements of a result vector.

As schematically illustrated, the vector processing system 100 comprises a vector shuffle unit 112, and a scalar index register file 106 comprising a scalar index register 104.

As previously mentioned, the scalar index register file 106 comprises $S_s$ scalar entries, each scalar entry having a size of W bits.

$S_s$ is a positive integer larger than 1. In some embodiments, the total number $S_s$ of scalar entries in the scalar index register file is 4, but the number of scalar entries can be another suitable number.

Further, W is the scalar word size, i.e., the number of bits stored per scalar index register. W is a positive integer larger than 1. In some embodiments, W is a multiple of 8.

The vector processing system 100 comprises further a vector register file 110 configured to comprise the source vector register 108' and the destination vector register 108".

As previously mentioned, the vector register file 110 comprises $S_v$ vector entries, each vector entry comprises P vector elements and each vector element P has a size of W bits.

$S_v$ is a positive integer larger than 1. In some embodiments, the total number $S_v$ of vector entries is 4, but the number of vector entries can be another suitable number.

Further, P is a positive integer larger than 1. In some embodiments, the total number P of vector elements is 8, but it can be another suitable number.

Furthermore, W is a positive integer between larger than 1. In some embodiments, W is a multiple of 8, but it can be another suitable number.

A broadcasting unit 114 is further comprised in the vector processing system 110. The broadcasting unit 114 is connected to or arranged in communication with the index register file 106 and connected to or arranged in communication with the vector shuffle unit 112.

When the vector processing system 100 receives a replicate instruction, the broadcasting unit 114 is configured to retrieve a dynamically generated index value from the index register 104 by means of the index register identifier comprised in the replicate instruction. This relates to action 301 and 302.

In some embodiments, the replicate instruction comprises two parallel operations initiated in the same clock cycle. Such a combined replicate instruction may comprise a broadcast operation and a shuffle operation and it may have the following syntax:

Broadcast(index register identifier)
‖ Shuffle(destination vector register identifier, source vector register identifier, broadcast vector identifier).

Further, as previously mentioned, in some embodiments, wherein the result vector is not stored in a destination vector register, the shuffle instruction may not comprise the destination vector register identifier, but only the source vector register identifier.

The vector shuffle unit 112 is connected to or arranged in communication with the vector register file 110. The vector shuffle unit 112 is configured to retrieve a source vector from a source vector register 108' by means of the source vector register identifier comprised in the shuffle operation of the replicate instruction. This relates to action 303.

Further, the broadcasting unit 114 is configured to directly broadcast the retrieved dynamically generated index into a plurality of elements of a broadcast vector 120 that may be used as an input argument to the vector shuffle unit 112. In this description, the broadcast vector and the input argument are therefore sometimes referred to as a shuffle pattern vector 120 and a shuffle pattern vector argument, respectively, since the shuffle pattern vector 120 will be used as a shuffle pattern ector argument to the vector shuffle unit 112. This means that the retrieved dynamically generated index value is broadcasted directly into an input vector argument of the vector shuffle unit 112. This relates to action 304.

By means of the broadcast vector identifier, the broadcast vector, i.e. the shuffle pattern vector, can be identified and used as a shuffle pattern vector argument to the vector shuffle unit 112. Thus, by means of the shuffle pattern vector argument, the vector shuffle unit 112 is then configured to replicate the single element of the retrieved source vector, which is identified by every element of shuffle pattern vector 120, into a plurality of vector elements comprised in a result vector. This relates to action 304.

Further, the vector shuffle unit 112 may be configured to store the result vector in the destination vector register 108" identified by the destination vector register identifier comprised in the replicate instruction. This relates to action 305.

Example 4

Assume that the scalar index register file 106 comprises four scalar index registers 104 numbered with the indices 0, 1, 2, and 3, and comprising the dynamically generated index values 1, 2, 3 and 4, respectively.

Assume also that the vector register 110 comprises a source vector 108'. The source vector 108' comprises eight vector elements 0, 1, 2, 3, 4, 5, 6, and 7 comprising the values A, B, C, D, E, F, G, and H, respectively.

Further, assume that the shuffle pattern vector 120 comprises eight elements.

If the index register identifier identifies the index register with index 2, the dynamically generated index value 3 is broadcasted into each of the eight elements of the shuffle pattern vector 120. This results in that the shuffle pattern vector 120 comprises the following elements: 3, 3, 3, 3, 3, 3, 3, and 3. Then the shuffle pattern vector 120 is used as a shuffle pattern vector argument by the vector shuffle unit 112 to replicate the vector element 3 having value D of the source vector corresponding to the index value 3 into a plurality of vector elements of the result vector.

**Figure 8** depicts **a fifth group of embodiments** of the vector processing system 100 for replicating a single element of a source vector into a plurality of elements of a result vector.

As schematically illustrated, the vector processing system 100 comprise a vector shuffle unit 112, and a scalar index register file 106 comprising a scalar index register 104.

As previously mentioned, the scalar index register file 106 comprises $S_s$ scalar entries, each scalar entry having a size of W bits.

$S_s$ is a positive integer larger than 1. In some embodiments, the total number $S_s$ of scalar entries in the scalar index register file is 4, but the number of scalar entries can be another suitable number.

Further, W is the scalar word size, i.e., the number of bits stored per scalar index register. W is a positive integer larger than 1. In some embodiments, W is a multiple of 8.

The vector processing system 100 comprises further a vector register file 110 configured to comprise the source vector register 108' and the destination vector register 108".

As previously mentioned, the vector register file 110 comprises $S_v$ vector entries, each vector entry comprises P vector elements and each vector element P has a size of W bits.

$S_v$ is a positive integer larger than 1. In some embodiments, the total number $S_v$ of vector entries is 4, but the number of vector entries can be another suitable number.

Further, P is a positive integer larger than 1. In some embodiments, the total number P of vector elements is 8, but it can be another suitable number.

Furthermore, W is a positive integer between larger than 1. In some embodiments, W is a multiple of 8, but it can be another suitable number.

A broadcasting unit 114 is further comprised in the vector processing system 100.

The vector processing system 100 comprises further a transferring unit 116 and a shuffle pattern register file 122. In some embodiments, the transferring unit 116 is comprised in the vector shuffle unit 112.

The shuffle pattern register file 122 may be comprised in the vector shuffle unit 112. However, in some embodiments, the shuffle pattern register file 122 is comprised in the vector register file 110.

When the vector processing system 100 receives a replicate instruction, the broadcasting unit 114 is configured to retrieve a dynamically generated index value from the index register 104 by means of the index register identifier comprised in the replicate instruction. This relates to action 301 and 302.

In some embodiments, the replicate instruction comprises two sequential operations denoted [1] and [2] below. The two operations are initiated in subsequent clock cycles. Such a combined replicate instruction may first comprise a broadcast operation parallel with and move operation, followed in the next cycle by a shuffle operation and it may have the following syntax:

[1] Broadcast(index register identifier)
‖ move(shuffle pattern register identifier, broadcast vector identifier)
[2] Shuffle(destination vector register identifier, source vector register identifier, shuffle pattern register identifier)

Further, as previously mentioned, in some embodiments, wherein the result vector is not stored in a destination vector register, the shuffle instruction may not comprise the destination vector register identifier, but only the source vector register identifier.

The vector shuffle unit 112 is connected to or arranged in communication with the vector register file 110. The vector shuffle unit 112 is configured to retrieve a source vector from a source vector register 108' by means of the source vector register identifier comprised in the shuffle operation of the replicate instruction.

Further, the broadcasting unit 114 is configured to broadcast the retrieved dynamically generated index value into a plurality of elements of a broadcast vector 120, which broadcast vector 120 may be used as an input argument to the transferring unit 116. However, the broadcast vector 120 may be used as an input argument to the vector shuffle unit 112. In this description, the broadcast vector and the input argument are therefore sometimes referred to as a shuffle pattern vector 120 and a shuffle pattern vector argument, respectively, since the shuffle pattern vector 120 will be used as a shuffle pattern vector argument to the vector shuffle unit. This relates to action 304.

The transferring unit 116 is configured to identify the broadcast vector by means of the broadcast identifier and to move the broadcast vector, i.e., the shuffle pattern vector 120, to a shuffle pattern register 118 comprised in the shuffle pattern register file 122 and identified by the shuffle pattern register identifier. This relates to action 304.

Further, the vector shuffle unit 112 is configured to retrieve the shuffle pattern vector 120 from the shuffle pattern register 118. The shuffle pattern register identifier comprised in the shuffle operation identifies the shuffle pattern vector 120 to be retrieved. This relates to action 304.

By means of shuffle pattern vector 120 comprising the index value of a single element to be replicated and by using the shuffle pattern vector 120 as an shuffle pattern vector argument to the vector shuffle unit 112, the vector shuffle unit 112 is configured to replicate the single element into a plurality of vector elements comprised in a result vector. This relates to action 304.

Further, the vector shuffle unit 112 may be configured to store the result vector in the destination vector register 108" identified by the destination vector register identifier comprised in the replicate instruction. This relates to action 305.

Example 5

Assume that the scalar index register file 106 comprises four scalar index registers 106 numbered with the indices 0, 1, 2, and 3, and comprising the dynamically generated index values 1, 2, 3 and 4, respectively.

Assume also that the vector register 108 comprises a source vector 108'. The source vector 108' comprises eight vector elements 0, 1, 2, 3, 4, 5, 6, and 7 comprising the values A, B, C, D, E, F, G, and H, respectively.

Further, assume that the shuffle pattern vector 120 comprises eight elements.

If the index register identifier identifies the index register with index 2, the dynamically generated index value is 3 is broadcasted into each of the eight elements of the shuffle pattern vector 120. This results in that the shuffle pattern vector 120 comprises the following elements: 3, 3, 3, 3, 3, 3, 3, and 3.

The transferring unit 116 stores the shuffle pattern vector 120 in the shuffle pattern register 118 comprised in the shuffle pattern register file 122.

The vector shuffle unit 112 retrieves the shuffle pattern vector 120 from the shuffle pattern register file 122 and uses it as an shuffle pattern vector argument to replicate the vector element 3 having value D of the source vector corresponding to the index value 3 into a plurality of vector elements of the result vector.

In the examples given above absolute values of the dynamically generated index values have been used. However, it should be understood that the same or similar principle applies relative values of the dynamically generated index values.

Embodiments herein do also relate to an integrated circuit comprising the processing system, and to a communication device comprising the integrated circuit. Such communication device may comprise e.g. a base station, a network node, a relay station, a user equipment or any other device configured for communication.

Embodiments herein do also relate to a computer program product comprising a computer recordable medium having a computer readable program recorded thereon. The computer readable program, when executed on a computing device, is configured to cause the computing device to perform any of the actions previously described.

When using the word "comprise" or "comprising" it shall be interpreted as non-limiting, i.e. meaning "consist at least of".

When using the word "action"/"actions" it shall be interpreted broadly and not to imply that the actions have to be carried out in the order mentioned. Instead, the actions may be carried out in any suitable order other than the order mentioned. Further, some action/actions may be optional.

The embodiments herein are not limited to the above described preferred embodiments. Various alternatives, modifications and equivalents may be used. Therefore, the above embodiments should not be taken as limiting the scope of the invention, which is defined by the appending claims.

**Claims**

1.  A method in a vector processing system (100) for replicating a single element of a source vector into a plurality of vector elements of a result vector, the method comprising:

    - *receiving* (*301*) at least one replicate instruction comprising a source vector register identifier configured to identify a source vector register (108'),
    - *retrieving (302)* a dynamically generated index value from an index register (104);
    - by means of the source vector register identifier, *retrieving* (*303*) a source vector from the source vector register (108'); and
    - by means of the retrieved index value, *replicating* (*304*) a single element of the source vector identified by the retrieved index value into the plurality of vector elements of the result vector (*action 304*).

2.  The method according to claim 1, wherein the at least one replicate instruction further comprises a destination vector register identifier configured to identify a destination vector register (108") and wherein the method further comprises:

    - *storing (305)* the result vector in the destination vector register (108") identified by the destination vector register identifier.

3.  The method according to claim 1 or 2, further comprising:

    - *broadcasting (304)* the retrieved index value into a plurality of elements of a shuffle pattern vector (120); and
    - by means the shuffle pattern vector (120), *replicating* (*304*) a single element in the source vector into the plurality of vector elements of the result vector.

4.  The method according to claim 3, further comprising:

    - *moving (304)* the shuffle pattern vector (120) to a shuffle pattern register (118) comprised in a shuffle pattern register file (122), and
    - *retrieving (304)* the shuffle pattern vector (120) from the shuffle pattern register (118).

5.  A vector processing system (100) for replicating a single element of a source vector into a plurality of vector elements of a result vector, the vector processing system (100) comprising a replicating subsystem (102) configured to:

    - receive at least one replicate instruction comprising a source vector register identifier configured to identify a source vector register (108');
    - retrieve a dynamically generated index value from an index register (104);
    - by means of the source vector register identifier, retrieve a source vector from the source vector register (108'); and to
    - by means of the retrieved index value, replicate a single element of the source vector into the plurality of elements of the result vector.

6.  The vector processing system (100) according to claim 5, wherein the at least one replicate instruction further comprises a destination vector register identifier configured to identify a destination vector register (108"); and wherein the replicating subsystem (102) is further configured to store the result vector in the destination vector register (108") identified by the destination vector register identifier.

7.  The vector processing system (100) according to claim 5 or 6, wherein the replicating subsystem (102) comprises a vector shuffle unit (112), and wherein the vector shuffle unit (112) is configured to:

    - receive the at least one replicate instruction;
    - retrieve the dynamically generated index value from the index register (104);
    - by means of the source vector register identifier, retrieve the source vector from the source vector register (108');
    - by means of the retrieved index value, retrieve the single element from the source vector, and
    - by means of the retrieved index value, replicate a single element of the source vector into the plurality of vector elements of the result vector.

8.  The vector processing system (100) according to any of claim 5-7, wherein the index register (104) is a scalar index

14

register (104).

9. The vector processing system (100) according to claim 8, further comprising a scalar register file (106) configured to comprise the scalar index register (104).

10. The vector processing system (100) according to any of claim 5-7, wherein the index register (104) is a vector index register (108) configured to comprise the index value at a specific vector element of the vector index register (108).

11. The vector processing system (100) according to claim 5 or 6, wherein the replicating subsystem (102) comprises a vector shuffle unit (112) and a broadcast unit (114), and wherein:

- the broadcasting unit (114) is configured to:

- receive the at least one replicate instruction;
- retrieve the dynamically generated index value from the index register (104); and to
- broadcast the retrieved dynamically generated index value into a plurality of elements of a shuffle pattern vector (120) used as a shuffle pattern vector argument of the vector shuffle unit (112); and wherein:

- the vector shuffle unit (112) is configured to:

- receive the at least one replicate instruction;
- by means of the source vector register identifier, retrieve the source vector from the source vector register (108'); and to
- by means of the shuffle pattern vector (120), replicate the single element of the source vector into a plurality of vector elements of the result vector.

12. The vector processing system (100) according to claim 11, further comprising a transferring unit (116) configured to move the shuffle pattern vector (120) to a shuffle pattern register (118) comprised in a shuffle pattern register file (122), and wherein

- the vector shuffle unit (112) is configured to retrieve the shuffle pattern vector (120) from the shuffle pattern register (118).

13. The vector processing system (100) according to any of claim 5-12, further comprising a vector register file (110) configured to comprise the source vector register (108') and/or destination vector register (108").

14. An integrated circuit comprising a vector processing system (100) according to any of claims 5 - 13.

15. A communication device comprising an integrated circuit according to claim 14.

<--------------- Data fits in one vector register ------ >

| $A_{i,j}$ | $A_{i,j+1}$ | $A_{i,j+2}$ | . . | $A_{i,j+7}$ | Initialize the accumulator register with input value |

. . . . . . .

| $L^{*+}_{1,j}$ | .* | $L^{+}_{1,j}$ | $L^{+}_{1,j+1}$ | $L^{+}_{1,j+2}$ | . . | $L^{+}_{1,j+7}$ | 1st Vector Multiply-Negate and ACcumulate (VMACN) operation with one of the input as broadcasted scalar. |

. . . . . . .

| $L^{*+}_{2,j}$ | .* | $L^{+}_{2,j}$ | $L^{+}_{2,j+1}$ | $L^{+}_{2,j+2}$ | . . | $L^{+}_{2,j+7}$ | 2nd VMACN operation with one of the input as broadcasted scalar. |

. . . . . . .
. . . . . . .

| $L^{*+}_{i-1,j}$ | .* | $L^{+}_{i-1,j}$ | $L^{+}_{i-1,j+1}$ | $L^{+}_{i-1,j+2}$ | . . | $L^{+}_{i-1,j+7}$ | (i-1)th VMACN operation with one of the input as broadcasted scalar. |

– – – – – – – – – – – – – – – – – – – – – – – – – –

| $m_{i,j}$ | $m_{i,j+1}$ | $m_{i,j+2}$ | . . | $m_{i,j+7}$ | Result after (i-1) VMACN operations |

FIG. 1

FIG. 2

EP 2 584 460 A1

```
┌─────────────────────────────────────────────────────┐
│      301. Receive at least one replicate instruction  │
└─────────────────────────────────────────────────────┘
                          │
                          ▼
┌─────────────────────────────────────────────────────┐
│   302. Retrieve a dynamically generated index value   │
│                from an index register                 │
└─────────────────────────────────────────────────────┘
                          │
                          ▼
┌─────────────────────────────────────────────────────┐
│          303. Retrieve a source vector from           │
│                a source vector register               │
└─────────────────────────────────────────────────────┘
                          │
                          ▼
┌─────────────────────────────────────────────────────┐
│        304. Replicate a single element of the         │
│   source vector into a plurality of vector elements   │
│                  of a result vector                   │
└─────────────────────────────────────────────────────┘
                          │
                          ▼
┌ ─ ─ ─ ─ ─ ─ ─ ─ ─ ─ ─ ─ ─ ─ ─ ─ ─ ─ ─ ─ ─ ─ ─ ─ ─ ┐
      305. Store the result vector in a
│           destination vector register               │
└ ─ ─ ─ ─ ─ ─ ─ ─ ─ ─ ─ ─ ─ ─ ─ ─ ─ ─ ─ ─ ─ ─ ─ ─ ─ ┘
```

FIG. 3

FIG. 4

FIG. 5

FIG. 6

FIG. 7

FIG. 8

Europäisches
Patentamt

European
Patent Office

Office européen
des brevets

**EUROPEAN SEARCH REPORT**

Application Number

EP 11 18 5934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "AltiVec (TM) Technology Programming Interface Manual", , 1 June 1999 (1999-06-01), XP55019778, Retrieved from the Internet: URL:http://www.freescale.com/files/32bit/doc/ref_manual/ALTIVECPIM.pdf [retrieved on 2012-02-20] | 1,2,4-7, 12-15 | INV. G06F9/30 G06F15/80 |
| Y | * page 143 * | 3,8-11 | |
| Y | US 5 996 057 A (SCALES III HUNTER LEDBETTER [US] ET AL) 30 November 1999 (1999-11-30) * column 2, line 62 - column 3, line 5 * * column 6, lines 24-26 * * column 9, lines 13-20 * | 1-15 | |
| Y | US 2010/106944 A1 (SYMES DOMINIC HUGO [GB] ET AL) 29 April 2010 (2010-04-29) * paragraph [0124]; figures 12,13 * | 1-15 | |
| | | | TECHNICAL FIELDS SEARCHED (IPC) |
| Y | GB 2 390 700 A (ALPHAMOSAIC LTD [GB]) 14 January 2004 (2004-01-14) * page 11 * | 3,8-11 | G06F |

The present search report has been drawn up for all claims

| Place of search | Date of completion of the search | Examiner |
|---|---|---|
| Munich | 29 February 2012 | Kamps, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 5934

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2012

| Patent document cited in search report | | Publication date | Patent family member(s) | | Publication date |
|---|---|---|---|---|---|
| US 5996057 | A | 30-11-1999 | NONE | | |
| US 2010106944 | A1 | 29-04-2010 | NONE | | |
| GB 2390700 | A | 14-01-2004 | GB | 2390700 A | 14-01-2004 |
| | | | US | 2004019747 A1 | 29-01-2004 |
| | | | US | 2006095681 A1 | 04-05-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VAN BERKEL et al.** *Vector processing as an enabler for software-defined radio in handheld devices,* 2005, http://dl.acm.org/citation.cfm?id=1287309

- AltiVec™ Technology Programming Environments Manual. April 2006